# EUROPEAN PATENT SPECIFICATION

(11) **EP 2 537 820 B1**
(45) Date of publication and mention of the grant of the patent: **01.04.2015**
(21) Application number: 11848760.2
(22) Date of filing: 13.12.2011
(51) Int. Cl.: C04B 38/00, C04B 35/478, C04B 35/626, B01D 46/24

(54) **GREEN FORMED BODY, AND PROCESS FOR PRODUCTION OF HONEYCOMB STRUCTURE**
GRÜNFORMKÖRPER UND VERFAHREN ZUR HERSTELLUNG EINER WABENSTRUKTUR
CORPS CRU FAÇONNÉ ET PROCÉDÉ POUR LA PRODUCTION D'UNE STRUCTURE EN NID-D'ABEILLES

(30) Priority: 17.12.2010 JP 2010282006
(43) Date of publication of application: 26.12.2012
(73) Proprietor: Sumitomo Chemical Company Limited, Tokyo 104-8260 (JP)
(72) Inventor: UOE, Kousuke, Niihama-shi Ehime 792-8521 (JP); YAMANISHI, Osamu, Niihama-shi Ehime 792-8521 (JP)
(74) Representative: Vossius & Partner
(86) International application number: PCT/JP2011/078806
(87) International publication number: WO 2012/081580

(56) References cited:
- WO-A1-2010/074260
- JP-A- 2002 356 383
- JP-A- 2005 040 678
- US-A1- 2006 178 265
- DAIMON K: "Al2TiO5-MgTi205-kei Haiko Shoketsutai no Chosei to Netsubocho Tokusei /preparation and thermal expansion characteristics of sintered bodies of AL2TIOs-MGTI2Os SOLID SOLUTION WITH PREFERRED ORIENTATION", NIPPON SERAMIKKUSU KYOKAI GAKUJUTSU ROMBUSHI - JOURNAL OF THE CERAMIC SOCIETY OF JAPAN, NIPPON SERAMIKKUSU KYOKAI, TOKYO, JP, vol. 98, no. 4, 1 January 1990 (1990-01-01), pages 365-369, XP002994410, ISSN: 0914-5400

## Description

### Technical Field

The present invention relates to a green molded body and a method for producing a honeycomb structure.

### Background Art

In recent years, ceramics such as cordierite, aluminum titanate are increasing its utility value in the industry as materials constituting ceramic filters for collecting fine carbon particles contained in exhaust gases discharged from internal combustion engines such as diesel engines.

As a method for producing such ceramics, a method is known in which a ceramic raw material is molded and sintered. Also, a method is known in which as a raw material mixture for producing ceramics, using a raw material mixture further containing organic additives such as an organic binder, and a pore-forming agent, besides ceramic raw materials, a green molded body (unsintered molded body) prepared by molding this raw material mixture is sintered (see National Publication of International Patent Application No. 2001-524451).

WO 2010/074260 discloses a method for producing an aluminum titanate ceramic sintered body, wherein the shrinkage of a green body during sintering is reduced. Also disclosed is an aluminum titanate ceramic sintered body having a low thermal expansion coefficient and a high porosity. In the method for producing an aluminum titanate ceramic sintered body, 2-25 parts by weight of an inorganic oxide powder is mixed per 100 parts by weight of an aluminum titanate ceramic powder, the thus-obtained mixture is formed into a green body, and the thus-obtained green body is sintered.

### Summary of Invention

### Technical Problem

However, with the above method described in National Publication of International Patent Application No. 2001-524451, it is not easy to control the porosity of a honeycomb structure after sintered.

Hence, an object of the present invention is to provide a green molded body capable of easily controlling the porosity of a honeycomb structure and a method for producing a honeycomb structure with the use of the green molded body.

### Solution to Problem

To achieve the above object, the present invention provides a green molded body composed of a honeycomb-shaped cylindrical body with a plurality of through holes being formed approximately in parallel with each other, wherein the above cylindrical body contains a ceramic raw material powder and a fluorine source, and wherein the above ceramic raw material powder is the one for forming an aluminum titanate-based ceramics by sintering.

According to the above green molded body, the porosity of an obtained honeycomb structure composed of at least one of an aluminum titanate-based ceramics can be easily controlled by incorporating a fluorine source, when the honeycomb structure is produced by sintering. More specifically, from the viewpoint of achieving both a function as a filter, such as collecting fine particles in exhaust gases and the strength of a honeycomb structure, it is preferred that the honeycomb structure have an appropriate porosity (for example, 40% by volume to 50% by volume). This porosity lowers as sintering of ceramics proceeds, because the honeycomb structure shrinks by sintering. Generally, in the case where the sintering temperature is low, concatenated pores (through holes) are hardly formed because sintering of a ceramics is insufficient, and the porosity becomes too large. Therefore, conventionally, in order to obtain a honeycomb structure having appropriate through holes and an appropriate porosity, there was a need to increase the sintering temperature. In contrast to this, the green molded body of the present invention can accelerate the proceedings of sintering of ceramics by incorporation of a fluorine source, as compared to the case where a fluorine source is not contained. In contrast to this, the green molded body of the present invention can accelerate the proceedings of sintering of ceramics by incorporation of a fluorine source, as compared to the case where a fluorine source is not contained For this reason, it is possible to obtain a honeycomb structure having appropriate through holes and an appropriate porosity at a sintering temperature lower than ever before and to easily control the porosity of a ceramic honeycomb structure with the use of simple equipment. Further, from the viewpoint of achieving both a function as a filter, such as collecting fine particles in exhaust gases and the strength of a honeycomb structure, it is preferred that the honeycomb structure have an appropriate average pore size (for example, 12 µm to 18 µm), but, by using the green molded body of the present invention, it is also possible to easily control the average pore size in an appropriate range.

It is preferred that the above cylindrical body further contains a pore-forming agent. Also, it is preferred that the above cylindrical body further contains an organic binder.

It is preferred that the fluorine content in inorganic raw materials, in the above cylindrical body, be 20 ppm by mass or more. With the fluorine content in inorganic raw materials, in the cylindrical body, being 20 ppm by mass or more, it is possible to sufficiently promote sintering of a ceramics when a honeycomb structure is produced by sintering a green molded body and to more easily control the porosity of the honeycomb structure. Also, it is possible to lower the sintering temperature during sintering.

The present invention also provides a method for producing a honeycomb structure comprising a sintering step of sintering the above green molded body of the present invention. According to the method for producing a honeycomb structure, it is possible to efficiently produce a honeycomb structure in which porosity is controlled, with the use of simple equipment.

### Advantageous Effects of Invention

According to the present invention, it is possible to provide a green molded body capable of easily controlling the porosity of a honeycomb structure and a method for producing a honeycomb structure with the use of the green molded body.

### Brief Description of Drawings

Fig. 1(a) is a perspective view of a green molded body according to an embodiment of the present invention, and Fig. 1(b) is a front view of a first end face of the cylindrical body of Fig. 1(a).
Fig. 2(a) is a perspective view of a green molded body according to another embodiment of the present invention, and Fig. 2(b) is a front view of a first end face of the cylindrical body of Fig. 2(a).
Fig. 3(a) is a perspective view of a honeycomb structure formed by sintering the green molded body shown in Figs. 1(a) and 1(b), and Fig. 3(b) is a front view of a first end face of the honeycomb structure of Fig. 3(a).

### Description of Embodiments

Hereinafter, preferred embodiments of the present invention will be described in detail with reference to drawings. However, the present invention is not limited to the following embodiments. Note that the same or similar elements are provided with the same reference signs. In addition, the positional relationships of the left, right, top and bottom are as described in the drawings, however, the proportion of size is not limited to those shown in the drawings.

### <Green Molded Body>

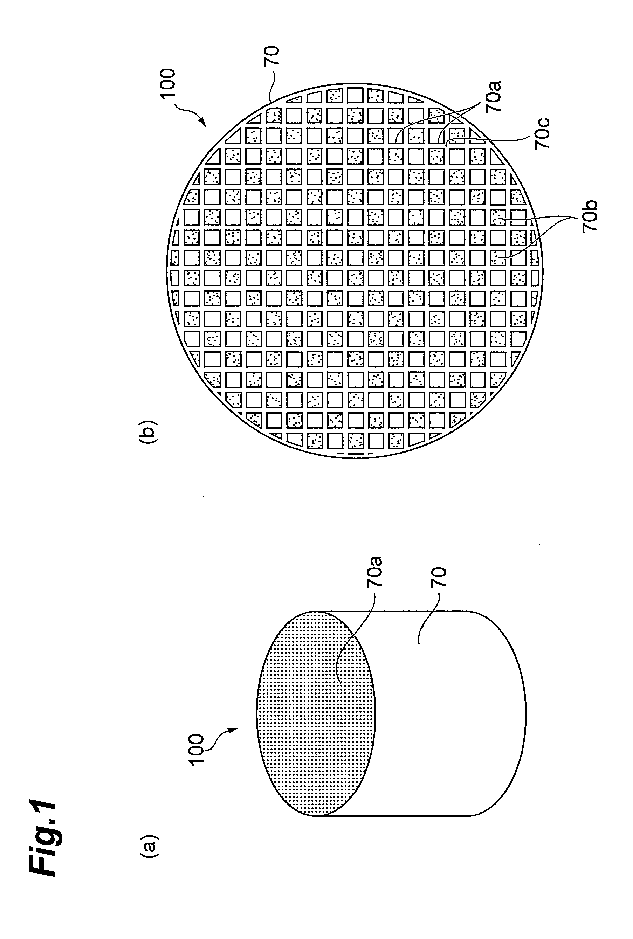

As shown in Figs. 1(a) and 1(b), a green molded body 100 comprises a columnar body (cylindrical body 70) having a honeycomb structure. The cylindrical body 70 has a plurality of partition walls 70c perpendicular to each other which are parallel to the central axis of the cylindrical body 70. That is, the cylindrical body 70 has a lattice structure in a cross section perpendicular to the central axis direction. In other words, in the cylindrical body 70, a large number of through holes 70a (flow passages) extending in the same direction (the central axis direction) are formed, and the partition walls 70c separate individual through holes 70a. The individual through holes 70a are perpendicular to both end faces of the cylindrical body 70. Note that the angle formed by the plurality of partition walls 70c possessed by the cylindrical body 70 is not particularly limited, as shown in Fig. 1(b), may be 90°, and may be 120°.

Some through holes among the plurality of through holes 70a are plugged with a plugging material 70b in a first end face (one side end face in two end faces possessed by the cylindrical body 70) perpendicular to the through holes. In the first end face, edge portions of the through holes 70a plugged with the plugging material 70b and edge portions of through holes 70a, which are open, are alternately arranged in a lattice pattern. The through holes 70a plugged with the plugging material 70b in the first end face open in a second end face opposite to the first end face. The through holes 70a which are open in the first end face are plugged with the plugging material 70b in the second end face (not shown). Therefore, also in the second end face, edge portions of the through holes 70a plugged with the plugging material 70b and edge portions of through holes 70a, which are open, are alternately arranged in a lattice pattern. In this way, the plurality of through holes 70a are plugged with the plugging material 70b in one side face of the first end face or the second end face.

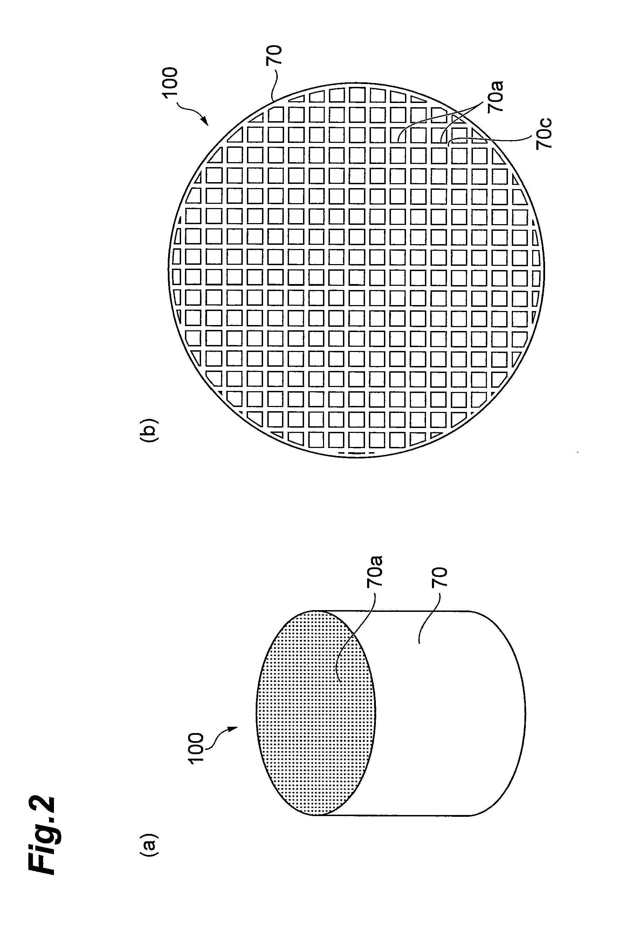

Fig. 2 is a view showing another embodiment of the green molded body. As shown in Figs. 2(a) and 2(b), in a green molded body 100, edge portions of through holes 70a may not be plugged with the plugging material 70b. In this case, when necessary, one end of the through holes 70a may be plugged after the green molded body 100 is sintered.

### (Cylindrical Body)

The cylindrical body 70 can be obtained by molding a raw material mixture, which is prepared by mixing an inorganic compound powder (inorganic raw material), a pore-forming agent, an organic binder, a solvent, and the like with the use of a kneading machine, or the like. The inorganic compound powder contains, as ceramic raw material powders, a raw material powder of aluminum titanate-based ceramics. The raw material powder of aluminum titanate-based ceramics contains a titanium source powder and an aluminum source powder. The raw material powder of aluminum titanate-based ceramics may further contain a magnesium source powder and a silicon source powder. The raw material mixture may contain an aluminum titanate-based ceramics in itself. With this, the degree of shrinkage of the green molded body 100 accompanied by sintering is lowered. Note that the aluminum titanate-based ceramics is, for example, aluminum titanate, and magnesium aluminum titanate.

### [Aluminum Source]

The aluminum source is a compound to be an aluminum constituent constituting an aluminum titanate sintered body. Examples of the aluminum source include alumina (aluminum oxide). Examples of the crystal types of alumina include γ-type, δ-type, θ-type, and α-type, and the crystal type may be amorphous. Among these, α-type alumina is preferably used.

The aluminum source may be a compound derived to alumina by sintering solely in the air. Examples of such a compound include aluminum salt, aluminum alkoxide, aluminum hydroxide, and metal aluminum.

The aluminum salt may be an inorganic salt formed with an inorganic acid, or an organic salt formed with an organic acid. Specific examples of the aluminum inorganic salt include aluminum nitrates such as aluminum nitrate, and aluminum ammonium nitrate; and aluminum carbonates such as aluminum ammonium carbonate. Examples of the aluminum organic salt include an aluminum oxalate, aluminum acetate, aluminum stearate, aluminum lactate, and aluminum laurate.

Specific examples of the aluminum alkoxide include aluminum isopropoxide, aluminum ethoxide, aluminum sec-butoxide, and aluminum tert-butoxide.

Examples of the crystal type of aluminum hydroxide include gibbsite type, bayerite type, norstrandite type, boehmite type, and pseudo-boehmite type, and the crystal type may be amorphous. Examples of the amorphous aluminum hydroxide include an aluminum hydrolysate obtained by hydrolyzing an aqueous solution of a water-soluble aluminum compound such as an aluminum salt, and an aluminum alkoxide.

The aluminum sources may be used alone, two or more types thereof may be used in combination.

Among the above, as an aluminum source, alumina is preferably used, and α-type alumina is more preferably used. Note that the aluminum source may contain a trace amount of constituents derived from the raw materials or inevitably contained in a production step.

The particle size of the aluminum source powder is not particularly limited. For instance, the particle size of the aluminum source powder equivalent to a cumulative percentage of 50% on a volumetric basis measured by laser diffractometry may be within the range of 1 µm to 60 µm. Note that this particle size is also referred to as D50 or an average particle size. From the viewpoint of lowering the degree of shrinkage of a green molded body at the time of sintering, it is preferred to use an aluminum source powder whose D50 is within the range of 20 µm to 60 µm, and it is more preferred to use an aluminum source powder whose D50 is within the range of 30 µm to 60 µm.

### [Titanium Source]

The titanium source is a compound to be a titanium constituent constituting an aluminum titanate sintered body, and examples of such a compound include titanium oxides. Examples of the titanium oxides include titanium oxide (IV), titanium oxide (III), and titanium oxide (II). Among these, titanium oxide (IV) is preferably used. The crystal types of titanium oxide (IV) include anatase type, rutile type, and brookite type, and the crystal type may be amorphous. More preferred is an anatase type or a rutile type titanium oxide (IV).

The titanium source may be a compound derived to titania (titanium oxide) by sintering solely in the air. Examples of such a compound include titanium salts, titanium alkoxides, titanium hydroxides, titanium nitrides, titanium sulfides, and titanium metals.

Specific examples of the titanium salts include titanium trichloride, titanium tetrachloride, titanium (IV) sulfide, titanium (VI) sulfide, and titanium (IV) sulfate. Specific examples of the titanium alkoxides include titanium (IV) ethoxide, titanium (IV) methoxide, titanium (IV) t-butoxide, titanium (IV) isobutoxide, titanium (IV) n-propoxide, and titanium (IV) tetraisopropoxide, and chelate compounds thereof.

The titanium sources may be used alone or two or more types thereof may be used in combination.

Among the above, as a titanium source, a titanium oxide is preferably used, and a titanium oxide (IV) is more preferably used. Note that the titanium source may contain a trace amount of constituents derived from the raw materials or inevitably contained in a production step.

The particle size of the titanium source powder is not particularly limited. For instance, the particle size (D50) of the titanium source powder equivalent to a cumulative percentage of 50% on a volumetric basis measured by laser diffractometry may be within the range of 0.5 µm to 25 µm. From the viewpoint of lowering the degree of shrinkage of a green molded body at the time of sintering, it is preferred that D50 of the titanium source powder be within the range of 1 µm to 20 µm. Note that the titanium source powder may indicate a bimodal particle size distribution, and in the case where a titanium source powder indicating such a bimodal particle size distribution is used, it is preferred that a peak in which a particle size is larger in a particle size distribution measured by laser diffractometry be within the range of 20 µm to 50 µm in particle size.

The mode diameter of the titanium source powder measured by laser diffractometry is not particularly limited, however, it may be within the range of 0.3 µm to 60 µm.

### [Magnesium Source]

The magnesium source is a compound to be a magnesium constituent constituting a cordierite sintered body. In addition, in the case where an aluminum titanate sintered body is formed, the raw material mixture may also contain a magnesium source. A honeycomb structure 170 produced from the green molded body 100 containing a magnesium source is a sintered body of a magnesium aluminum titanate crystal.

Examples of the magnesium source include, besides magnesia (magnesium oxide), compounds derived to magnesia by sintering solely in the air. Examples of the latter include magnesium salts, magnesium alkoxides, magnesium hydroxides, magnesium nitrides, and metal magnesium.

Specific examples of the magnesium salts include magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

Specific examples of the magnesium alkoxides include magnesium methoxide, and magnesium ethoxide. Note that the magnesium source may contain a trace amount of constituents derived from the raw materials or inevitably contained in a production step.

As a magnesium source, a compound combining a magnesium source with an aluminum source can also be used. Examples of such a compound include magnesia spinel (MgAl₂O₄).

The magnesium sources may be used alone or two or more types thereof may be used in combination.

The particle size of the magnesium source powder is not particularly limited. For instance, the particle size (D50) of the magnesium source powder equivalent to a cumulative percentage of 50% on a volumetric basis measured by laser diffractometry may be within the range of 0.5 µm to 30 µm. From the viewpoint of lowering the degree of shrinkage of a green molded body at the time of sintering, it is preferred to use a magnesium source powder whose D50 is within the range of 3 µm to 20 µm.

In the case where an aluminum titanate is formed by sintering, it is preferred that the molar amount of the magnesium source, in terms of MgO (magnesia), in a green molded body, be 0.03 to 0.15, and more preferred is 0.03 to 0.12, with respect to the total molar amount of the aluminum source in terms of Al₂O₃ (alumina) and the titanium source in terms of TiO₂ (titania). By adjusting the content of the magnesium source within this range, it is possible to obtain an aluminum titanate sintered body having more increased heat resistance, a large pore size and a large open porosity, with relative ease.

### [Silicon Source]

When an aluminum titanate is formed, the raw material mixture may also further contain a silicon source. In this case, the silicon source is a compound contained, as a silicon constituent, in an aluminum titanate sintered body. With the use of a silicon source in combination, it is possible to obtain an aluminum titanate having more increased heat resistance. Examples of the silicon source include silicon oxides (silica) such as silicon dioxide, and silicon monoxide.

The silicon source may be a compound derived to silica by sintering solely in the air. Examples of such a compound include silica, silicon carbide, silicon nitride, silicon sulfide, silicon tetrachloride, silicon acetate, sodium silicate, sodium orthosilicate, feldspar, and glass frit. Among these, feldspar and glass frit or the like are preferably used, and from the viewpoint of industrially easy availability and stability of the composition, glass frit or the like is more preferably used. Note that the glass frit means a flaky or powdery glass obtained by pulverizing glass. As a silicon source, it is also possible to use a powder composed of a mixture of a feldspar and a glass frit.

In the case where the silicon source is a glass frit, from the viewpoint of further improving the resistance to thermal decomposition of the obtained aluminum titanate sintered body, it is preferred to use a glass frit whose yield point is 700°C or higher. The yield point of glass frit is defined as a temperature (°C) at which the expansion of glass frit is measured from a low temperature, the expansion ceases and then the shrinkage begins by using a thermo mechanical analysis (TMA) device.

As a glass constituting a glass frit, it is possible to use a typical silicate glass containing silica (SiO₂) as a main ingredient (50% by mass or more in the total constituents). The glass constituting a glass frit may contain, as other constituents to be contained, alumina (Al₂O₃), sodium oxide (Na₂O), potassium oxide (K₂O), calcium oxide (CaO), magnesia (MgO) and the like, as is the case with a typical silicate glass. Further, the glass constituting a glass frit may contain ZrO₂ in order to improve the hydrothermal resistance of the glass itself.

The silicon sources may be used alone or two or more types thereof may be used in combination.

The particle size of the silicon source powder is not particularly limited. For instance, the particle size (D50) of the silicon source equivalent to a cumulative percentage of 50% on a volumetric basis measured by laser diffractometry may be within the range of 0.5 µm to 30 µm. In order to further increase the specific gravity of a green molded body and to obtain a sintered body having higher mechanical strength, it is preferred that the D50 of the silicon source be within the range of 1 µm to 20 µm.

In the case where the raw material mixture contains a silicon source when an aluminum titanate is formed by sintering, the content of the silicon source in the raw material mixture is, in terms of SiO₂ (silica), usually 0.1 parts by mass to 10 parts by mass, and preferably 5 parts by mass or less, with respect to 100 parts by mass of the total amount of an aluminum source in terms of Al₂O₃ (alumina) and a titanium source in terms of TiO₂ (titania). It is more preferred that the content of the silicon source in the raw material mixture be 2% by mass to 5% by mass relative to the total amount of inorganic compound source contained in the raw material mixture. The silicon source may contain a trace amount of constituents derived from the raw materials or inevitably contained in a production step.

It is possible to use, as a raw material, a compound with two or more metal elements being constituents selected from titanium, aluminum, silicon and magnesium, like a composite oxide such as magnesia spinel (MgAl₂O₄).

To the raw material mixture, silica sol can be added. By adding silica sol, it is possible to adsorb fine particles in the raw material mixture to each other, to set the amount of particles with particle sizes of 0.1 µm or smaller in the green molded body to 1% by weight to 5% by weight relative to the total amount of the inorganic compound powder, and to improve the strength of the honeycomb structure. Silica sol means a colloid in which fine powdery silica is a dispersoid and a liquid is a dispersion medium. The silica sol can also be used alone as a silicon source, however, it is preferred that the silica sol is used with other silicon sources in combination. The dispersion medium of the silica sol is removed, for example, by evaporation or the like at the time of mixing or at the time of calcination.

Examples of the dispersion medium of silica sol include aqueous solutions and various kinds of organic solvents, such as an ammonium aqueous solution, alcohol, xylene, toluene, and triglyceride. As a silica sol, a colloidal silica sol whose average particle size is 1 nm to 100 nm is preferably used. By the use of a silica sol having such an average particle size, there are advantages in that it is possible to adsorb particles in the raw material mixture to each other and to fuse and bind them at the time of sintering.

Examples of commercially available silica sol products include "SNOWTEX 20, 30, 40, 50, N, O, S, C, 20L, OL, XS, XL, YL, ZL, QAS-40, LSS-35, and LSS-45" produced by Nissan Chemical Industries Ltd.; "ADELITE AT-20, AT-30, AT-40, AT-50, AT-20N, AT-20A, AT-30A, AT-20Q, AT-300, and AT-300Q" produced by Adeka Corporation; "CATALOID S-20L, S-20H, S-30L, S-30H, SI-30, SI-40, SI-50, SI-350, SI-500, SI-45P, SI-80P, SN, SA, and SC-30" produced by JGC Catalysts and Chemicals Ltd.; and "LUDOX HS-40, HS-30, LS, SM-30, TM, AS, and AM" produced by DuPont. Among these, it is preferred to use "SNOWTEX C", of which colloidal state is stable in neutral regions.

The content of silica sol in the raw material mixture relative to the total amount of the inorganic compound powder (solids) is preferably 0% by mass to 10% by mass, and more preferably 0% by mass to 5% by mass. Two or more types of silica sols may be mixed for use.

### [Fluorine Source]

The fluorine source is, for example, a hydrogen fluoride, or an aluminum fluoride. Further, the fluorine source may be the one adsorbed to or compounded with the above aluminum source, titanium source, magnesium source, silicon source and the like, and for example, it may be an alumina containing fluorine. In order to homogenously disperse the fluorine source in a green molded body, it is preferred to use an alumina containing fluorine. The alumina containing fluorine can be prepared, for example, by a method of mixing alumina and a hydrogen fluoride, or a method of mixing and heating alumina and an aluminum fluoride. In addition, in a method of producing alumina by heating an aluminum hydroxide in a furnace, fluorine-containing alumina fine particles accompanied by an exhaust gas can also be used.

The content of the fluorine source in the raw material mixture is usually such an amount that the fluorine content in the inorganic raw material (inorganic compound powder) in the cylindrical body 70 being a green molded body is 20 ppm by mass to 10,000 ppm by mass, preferably such an amount that the fluorine content is 20 ppm by mass to 2,000 ppm by mass, more preferably such an amount that the fluorine content is 30 ppm by mass to 2,000 ppm by mass, and still more preferably such an amount that the fluorine content is 50 ppm by mass to 1,500 ppm by mass. By setting the fluorine content within the above range, it is possible to sufficiently promote sintering of ceramics and to easily control the porosity of a honeycomb structure. Note that the above fluorine content can also be determined by measuring the fluorine content in inorganic raw materials when preparing the raw material mixture. In the present invention, the fluorine content is a content relative to the total amount of inorganic raw materials, and is measured according to JIS R 9301-3-11 (quantitative determination of fluorine).

From the viewpoint of increasing the fluorine content in inorganic raw materials in the cylindrical body 70, it is preferred to use an aluminum fluoride as a fluorine source. By the use of an aluminum fluoride, it is possible to further accelerate the proceedings of sintering of a ceramic. In the case where an aluminum fluoride is used, the aluminum fluoride content may be adjusted so that the fluorine content in inorganic raw materials is within the above range, however, usually, the aluminum fluoride content is 0.01% by mass to 0.3% by mass relative to the total amount of inorganic raw materials.

### [Organic Binder]

As the organic binder, a water-soluble organic binder is preferable. Examples of the water-soluble organic binder include celluloses such as methylcellulose, hydroxypropylmethyl cellulose, and hydroxyethylmethylcellulose; alcohols such as polyvinyl alcohol; and salts such as lignin sulfonic acid salt.

The organic binder content in the raw material mixture is usually 20 parts by mass or less, preferably 15 parts by mass or less, and more preferably 6 parts by mass, with respect to 100 parts by mass of the inorganic compound powder. Further, the lower limit amount of the organic binder is usually 0.1 parts by mass, and preferably 3 parts by mass.

### [Solvent]

As the solvent, it is possible to use, for example, alcohols such as methanol, ethanol, butanol, and propanol; glycols such as propylene glycol, polypropylene glycol, and ethylene glycol; and a polar solvent such as water. Among these, water is preferred, and in terms of containing less impurity, ion-exchanged water is more preferably used. The use amount of the solvent is usually 10 parts by mass to 100 parts by mass, and preferably 20 parts by mass to 80 parts by mass, with respect to 100 parts by mass of the inorganic compound powder. Note that a nonpolar solvent may be used as the solvent.

### [Other Additives]

The raw material mixture can contain organic additives other than the organic binder. The other organic additives are, for example, a pore-forming agent, a lubricant and a plasticizer, and a dispersant.

Examples of the pore-forming agent include carbon materials such as graphite; resins such as polyethylene, polypropylene, and polymethyl methacrylate; plant materials such as starch, nut shells, walnut shells, and corn; ice, dry ice. The addition amount of the pore-forming agent is usually 0 parts by mass to 40 parts by mass, preferably 0 parts by mass to 25 parts by mass, and more preferably 5 parts by mass to 25 parts by mass with respect to 100 parts by mass of the inorganic compound powder. The pore-forming agent dissipates at the time of sintering of a green molded body. Consequently, in an aluminum titanate sintered body, at portions where the pore-forming agent was present, micropores are formed.

Examples of the lubricant and the plasticizer include alcohols such as glycerin; higher fatty acids such as caprylic acid, lauric acid, palmitic acid, alginic acid, oleic acid and stearic acid, and metal stearate such as Al stearate; and polyoxyalkylene alkyl ether. The addition amount of the lubricant and the plasticizer is usually 0 parts by mass to 10 parts by mass, and preferably 1 part by mass to 5 parts by mass, with respect to 100 parts by mass of the inorganic compound powder.

Examples of the dispersant include inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarboxylate. The addition amount of the dispersant is usually 0 parts by mass to 20 parts by mass, and preferably 2 parts by mass to 8 parts by mass, with respect to 100 parts by mass of the inorganic compound powder.

### (Plugging Material)

As for the plugging material 70b, usually, the same material as in the cylindrical body 70 can be used. In addition, as the plugging material 70b, a material different from that in the cylindrical body 70 can also be used. It is preferred that the plugging material 70b contains a powder of aluminum titanate-based ceramics and/or a powder of cordierite-based ceramics. In the same way as the cylindrical body 70, the plugging material 70b contains the above pore-forming agent, organic binder, solvent and the like. Also, it is preferred that the plugging material 70b contain a fluorine source as with the cylindrical body 70. By mixing these constituents at a predetermined ratio, a pasty plugging material 70b can be obtained. Note that scrap pieces of ceramics obtained in the process of producing honeycomb structures and ceramic powders obtained by pulverizing damaged products of honeycomb structures may be reused as ceramic powders for the plugging material 70b. With this, raw material costs for honeycomb structures are reduced. The plugging material 70b may contain or may not contain a raw material powder (inorganic compound powder) of aluminum titanate-based ceramics and/or cordierite-based ceramics. In order to lower the degree of shrinkage of the plugging material 70b accompanied by sintering, it is preferred that the plugging material 70b contain a ceramic powders and do not contain raw material powders of ceramics. The average particle size of the ceramic powder is not particularly limited, however, it may be about 5 µm to about 50 µm.

In the case where the plugging material 70b contains a fluorine source, the fluorine content in inorganic raw materials in the plugging material 70b is preferably 20 ppm by mass or more, more preferably 20 ppm by mass to 10,000 ppm by mass, still more preferably 20 ppm by mass to 2,000 ppm by mass, particularly preferably 30 ppm by mass to 2,000 ppm by mass, and extremely preferably 50 ppm by mass to 1,500 ppm by mass. By making a fluorine source contained also in the plugging material 70b and setting the fluorine source content within the above range, it is possible to further promote sintering a ceramics and to more easily control the porosity of a honeycomb structure. As a fluorine source to be incorporated into the plugging material 70b, a fluorine source similar to the one to be incorporated in the cylindrical body 70 can be used. A ceramic powder containing fluorine may also be used.

Assuming that the sum of the mass of the ceramic powder and the mass of the pore-forming agent contained in the plugging material 70b is 100 parts by mass, a mass Mc of the ceramic powder contained in the plugging material 70b is preferably 80 parts by mass to 100 parts by mass, and more preferably 90 parts by mass to 100 parts by mass. With this, the degree of shrinkage of the plugging material 70b and the degree of shrinkage of the cylindrical body 70 at the time of sintering easily agree, and the sintering property of the plugging material 70b and the sintering property of the partition walls 70c of the through holes 70a are easily improved. In the case where the Mc is excessively small, the mass of the pore-forming agent in the plugging material 70b is large. As a result of this, there is a tendency that the degree of shrinkage of the plugging material 70b at the time of sintering becomes higher than the degree of shrinkage of the green molded body 70, and a crevice tends to occur between a plugging portion 170b after sintering and a partition wall. The pore-forming agent functions as a cushioning material for forming pores and matching the degree of shrinkage of the plugging material 70b to that of the partition wall 70c.

It is preferred that a percentage of mass R1 of the ceramic powder in the plugging material 70b be higher than a percentage of mass R2 of the ceramics and the raw material powder (inorganic compound powder) in the cylindrical body 70. With this, the degree of shrinkage of the plugging material 70b accompanied by sintering becomes easily higher than the degree of shrinkage of the plugging material 70b. That is, as R1 becomes higher than R2, the through holes 70a relatively shrink with respect to the plugging material 70b. As a result of this, the adhesion between the partition walls of the through holes 70a and the plugging material 70b and the sintering property in the sintering step are easily improved. The mass of the ceramic powder in the plugging material 70b is about 60% by mass to about 100% by mass with respect to the total amount of the plugging material 70b. In the case where the mass of the ceramic powder in the plugging material 70b is excessively small, there is a tendency that the degree of shrinkage of the plugging material 70b at the time of sintering becomes higher than that of the cylindrical body 70, and a crevice tends to occur between the plugging portion 170b of the honeycomb structure 170 and a partition wall. The mass of the ceramic powder in the cylindrical body 70, on the assumption that the sum of the mass of the ceramic powder, the mass of the raw material powder and the mass of the pore-forming agent contained in the whole of the cylindrical body 70 is 100 parts by mass, is about 1 part by mass to about 10 parts by mass. The mass of the raw material powder in the cylindrical body 70, on the assumption that the sum of the mass of the ceramic powder, the mass of the raw material powder and the mass of the pore-forming agent contained in the whole of the cylindrical body 70 is 100 parts by mass, is about 70 part by mass to about 90 parts by mass. Note that for the purpose of preventing liquid-solid separation of the plugging material 70b, it is preferred that the plugging material 70b be formed into a pasty liquid. For that purpose, assuming that the sum of the mass of the ceramic powder and the mass of the pore-forming agent contained in the plugging material 70b is 100 parts by mass, it is preferred that the mass of a binder in the plugging material 70b be set from 0.3 parts by mass to 3 parts by mass, the mass of a lubricant therein be set from 3 parts by mass to 20 parts by mass, and the viscosity of the plugging material 70b be set from 5 Pa·s to 200 Pa·s.

### <Honeycomb Structure>

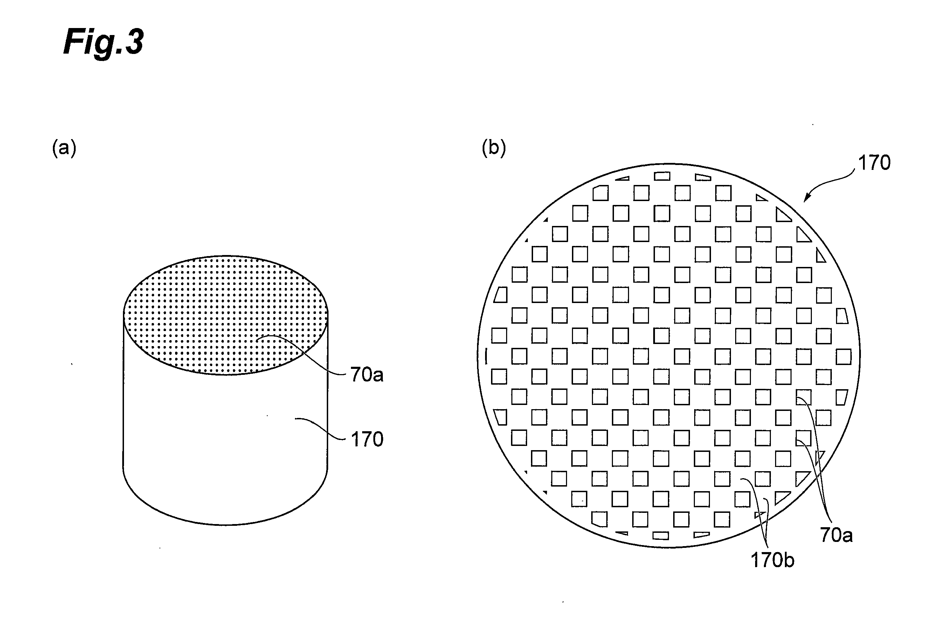

By sintering the green molded body 100 shown in Fig. 1, the ceramic powder and the raw material powder of ceramics contained in the cylindrical body 70 and in the plugging material 70b are sintered. The plugging material 70b is sintered with the partition wall 70a and integrated to form the plugging portion 170b. As a result of that, as shown in Figs. 3(a) and 3(b), the honeycomb structure 170 (multicellular ceramic monolith) composed of a porous aluminum titanate-based ceramics and/or a porous cordierite-based ceramics can be obtained. The honeycomb structure 170 may contain, in an X-ray diffraction spectrum, crystal patterns of alumina, titania, etc., besides a crystal pattern of aluminum titanate (Al₂TiO₅) or magnesium aluminum titanate (Al₂₍₁₋ₓ₎MgₓTi₍₁₊ₓ₎O₅), or a crystal pattern of cordierite (2MgO, 2Al₂O₃, 5SiO₂). The honeycomb structure 170 may contain silicon. The honeycomb structure 170 has a structure similar to that of the green molded body 100 and is suitable for DPF (Diesel Particulate Filter).

Particularly, a DPF composed of a magnesium aluminum titanate sintered body has advantages in that the coefficient of thermal expansion is extremely low, the melting point is high, and it is excellent in the thermal shock resistance at the time of recycling, and the limit amount of soot sediments is large, as compared to a DPF composed of SiC, a cordierite or an aluminum titanate single substance. Onto surfaces of partition walls of the honeycomb structure 170 for DPF, a platinum-based metal catalyst carried on a carrier such as alumina and a promoter such as ceria or zirconia or the like may be adsorbed.

The aluminum content in the aluminum titanate-based ceramics is not particularly limited, however, for example, it is 40 mol% to 60 mol% in terms of aluminum oxide. The titanium content in the aluminum titanate-based ceramics is not particularly limited, however, for example, it is 35 mol% to 55 mol% in terms of titanium oxide. It is preferred that the magnesium content in the aluminum titanate-based ceramics be 1% by mass to 5% by mass in terms of magnesium oxide. It is preferred that the silicon content in the aluminum titanate-based ceramics be 2% by mass to 5% by mass in terms of silicon oxide. Note that the composition of the aluminum titanate-based ceramics may be suitably adjusted in accordance with the composition of the raw material mixture. The aluminum titanate-based ceramics may contain, besides the above constituents, constituents derived from raw materials or a trace amount of constituents inevitably mixed in work in process in a production step.

The inner diameter (the length of one side of a square) of a cross section perpendicular to the longitudinal direction of the through holes 70a is not particularly limited, however, for example, it is 0.8 mm to 2.5 mm. The length of the honeycomb structure 170 in the direction the through holes 70a extend is not particularly limited, however, for example, it is 40 mm to 350 mm. In addition, the outer diameter of the honeycomb structure 170 is not also limited, however, for example, it is 10 mm to 320 mm. The length of the plugging portion 170b in the direction the through holes 70a extend is not particularly limited, however, it is 1 mm to 20 mm. The number of through holes 70a (cell density) open in an end face of the honeycomb structure 170 is not particularly limited, however, for example, it is 150 cpsi (cells per square inch) to 450 cpsi. The unit cpsi means "/inch²" and is equal to "/(0.0254m)²". The thickness of partition walls of the through holes 70a is not particularly limited, however, for example, it is 0.15 mm to 0.76 mm. The effective porosity of the honeycomb structure 170 is about 30% by volume to about 60% by volume. The average diameter of pores formed in the honeycomb structure 170 is about 1 µm to about 20 µm. The pore size distribution (D₉₀ - D₁₀)/D₅₀ is about less than 0.5. Note that D₁₀, D₅₀, and D₉₀ are pore sizes when a cumulative pore capacity of the entire pore capacity accounts for 10%, 50%, and 90%, respectively.

### <Method for producing Green molded body>

### (Preparation step of raw material mixture and Molding step)

In order to form the cylindrical body 70, an inorganic compound powder, a pore-forming agent, an organic binder, a solvent and the like are mixed by a kneading machine or the like to prepare a raw material mixture. By molding the raw material mixture with the use of an extruder equipped with a die having lattice openings, the cylindrical body 70 is formed. Note that a raw material mixture before being extrusion molded may be kneaded.

### (Preparation step of Plugging material)

A plugging material is prepared by a method similar to that in the raw material mixture for the cylindrical body 70.

### (Plugging Step)

In a plugging step, a first mask is attached to a first end face where a plurality of through holes 70a are open. In the first mask, a plurality of mask portions having the substantially same size as the through holes 70a and a plurality of openings having the substantially same size as the through holes 70a are arranged in a staggered pattern. The first mask is attached to the first end face of the cylindrical body 70 so that individual through holes 70a, individual mask portions and individual openings overlap one another. Further, a second mask is attached to a second end face opposite to the first end face in the cylindrical body 70. The arrangement relationship between openings and mask portions possessed by the second mask is precisely opposite to that of the first mask. Therefore, through holes 70a plugged by mask portions of the first mask on the side of the first end face overlap with openings of the second mask on the side of the second end face. Through holes 70a plugged by mask portions of the second mask on the side of the second end face overlap with openings of the first mask on the side of the first end face. Therefore, any of the plurality of through holes 70a formed in the cylindrical body 70 open in either of the first end face or the second end face and are plugged by mask portions in the other end face. Note that in the periphery portion of the cylindrical body 70, imperfect through holes with a cross sectional shape thereof not being a desired shape (a square in this embodiment) may also be present. Such imperfect through holes may be plugged with the plugging material in both of the first end face and the second end face. For this reason, a first mask and a second mask which have such openings that can plug both end faces of imperfect through holes may be used. In this case, imperfect through holes are in a state of being opened at both of the first end face and the second end face, without being plugged by mask portions.

In a plugging step for the first end face, the above plugging material is introduced in the edge portions of individual through holes 70a overlapping with openings of the first mask. Note that after the plugging material is introduced into the through holes 70a, the whole of the cylindrical body 70 may be vibrated by a vibrator. With this, crevices at the edge portions of the through holes 70a are easily thoroughly filled with the plugging material.

After the above mentioned plugging step for the first end face, a plugging step for the second end face onto which the second mask is attached is carried out in the same manner as in the plugging step for the first end face. After the plugging steps are carried out for the both end faces, each of the masks is peeled off from each of the end faces. With this, a green molded body 100 shown in Figs. 1(a) and 1(b) is completed. Note that in the plugging steps, the second mask may be attached to the second end face after the plugging step for the first end face. Also, the first mask may be peeled off from the first end face after the plugging step for the first end face and before the plugging step for the second end face is performed. In addition, the plugging method is not limited to the above mentioned method.

### <Method for producing Honeycomb structure>

The green molded body 100 made by the above method is subjected to calcination (degreasing) and sintered, and thereby the honeycomb structure 170 shown in Figs. 3(a) and 3(b) can be obtained. The honeycomb structure 170 almost maintains the shape of the green molded body 100 immediately after being extrusion molded.

The calcination (degreasing) is a step for removing an organic binder in the green molded body 100 and organic additive blended as required therein by burn-off, decomposition, or the like. A typical calcination step corresponds to an initial stage of the sintering step, i.e., a temperature rise stage (for example, the temperature range of 300°C to 900°C) where the temperature of the green molded body 100 reaches a sintering temperature. In the calcination (degreasing) step, it is preferred to suppress the rate of temperature rise to a minimum.

The sintering temperature of the green molded body 100 is usually 1250°C or higher, preferably 1300°C or higher, and more preferably 1400°C or higher. In addition, the sintering temperature is usually 1650°C or lower, and preferably 1550°C or lower. By heating the green molded body 100 within this temperature range, the inorganic compound powder and the ceramic powder in the green molded body 100 are surely sintered. The rate of temperature rise up to the sintering temperature is not particularly limited, however, usually, it is 1°C/hour to 500°C/hour. At this stage, from the viewpoint of efficiently functioning the fluorine source in the green molded body 100 and easily obtaining a honeycomb structure 170 having an appropriate porosity, it is preferred that the sintering temperature be set from 1250°C to 1600°C, the sintering time be set from 0.1 hours to 10 hours, and the rate of temperature rise up to the above sintering temperature be set 1°C/hour to 100°C/hour.

The sintering is usually carried out in the air, however, depending on the type of the raw material powder to be used, i.e., aluminum source powder, titanium source powder, magnesium source powder and silicon source powder, and the rate of use amount thereof, the green molded body may be sintered in an inert gas such as nitrogen gas, and argon gas, or may be sintered in a reducing gas such as carbon monoxide, and hydrogen gas. Also, the sintering may be performed in an atmosphere where the partial water vapor pressure is lowered.

The sintering is performed using a common furnace such as tubular electric furnaces, boxy electric furnaces, tunnel furnaces, far infrared furnaces, microwave heating furnaces, shaft furnaces, reverberating furnaces, rotary furnaces, and roller hearth furnaces. The sintering may be performed in a batch type or in a continuous type process. Additionally, the sintering may be performed in a still standing type or in a fluid type process.

The time required for the sintering may be a time sufficient for the green molded body 100 to transfer to the aluminum titanate-based crystal, and it differs depending on the amount of the green molded body 100, the system of a furnace, the sintering temperature, the sintering atmosphere and the like, however, it is usually 10 minutes to 24 hours.

Note that calcination and sintering of the green molded body 100 may be performed separately or may be performed continuously. In the calcination step, the green molded body 100 may be heated at a temperature equal to or higher than the thermal decomposition temperatures of the organic binder and other organic additives and lower than the sintering temperature of the inorganic compound powder. In the sintering step, the green molded body 100 after the calcination step may be heated at a temperature equal to or higher than the sintering temperature of the inorganic compound powder.

Hereinbefore, a preferred embodiment of the present invention has been described in detail, however, the present invention is not limited to the above embodiment.

For instance, the cylindrical body 70 and the plugging material 70b may contain, besides the ceramics and the raw material powder thereof described above, ceramics such as silicon carbide and the raw material powder thereof. The shape of the honeycomb structure 170 is not limited to a columnar shape, and may take an optional shape, depending on the usage. For instance, the shape of the honeycomb structure 170 may be a polygonal column, an elliptical column, or the like. In addition, the shape of the through holes 70a in a cross section perpendicular to its longitudinal direction is not limited to a square, and can be formed in a rectangle, a circle, an ellipse, a triangle, a hexagon, an octagon or the like. Further, in the through holes 70, through holes which are different in diameter or different in cross sectional shape may be present in a mixed manner.

Application of the honeycomb structure is not limited to DPF. The honeycomb structure can be preferably applied for an exhaust gas filter used for the clarification of exhaust gases from an internal combustion engine such as gasoline engines, or a catalyst carrier, a filtration filter used for filtering food or beverages such as beer, a ceramic filter such as a selectively permeable filter for selectively permeating gas constituents (for example, carbon monoxide, carbon dioxide, nitrogen, oxygen, etc.) occurring at the time of purification of oil. Among these, in the case where the honeycomb structure is used as a ceramic filter and the like, it can maintain excellent filtering ability over the long term, because aluminum titanate-based ceramics has a high pore capacity and a high open porosity.

### Examples

Hereinafter, the present invention will be further concretely described based on Examples, however, the present invention is not limited to the following Examples.

### (Example 1)

Individual constituents were mixed in compounding amounts (unit: part by mass) shown in the following Table 1 to prepare a raw material mixture. The fluorine content in inorganic raw materials (alumina powder, titania powder, magnesia powder, glass frit, magnesium aluminum titanate powder, and aluminum fluoride) in the obtained raw material mixture was 1300 ppm by mass.

This raw material mixture was kneaded and extrusion molded, thereby making a green molded body 100 composed of a cylindrical body 70 with a plurality of through holes 70a being formed approximately parallel to each other.

The obtained green molded body 100 was dried by a microwave dryer (manufactured by Fuji Electronic Industrial Co., Ltd.; FDU-243VD-03), heated in an exhaust gas circulating type gas furnace at a rate of temperature rise of 40°C/hour to increase the temperature thereof up to 1500°C, and then sintered at 1500°C for 5 hours, thereby obtaining a honeycomb structure 170 composed of a porous sintered body of magnesium aluminum titanate. The porosity of the honeycomb structure was 42.4% by volume, and the average pore size thereof was 16.0 µm.

### (Example 2)

Individual constituents were mixed in compounding amounts (unit: part by mass) shown in the following Table 1 to prepare a raw material mixture. The fluorine content in inorganic raw materials (alumina powder, titania powder, magnesia powder, glass frit, and magnesium aluminum titanate powder) in the obtained raw material mixture was 37 ppm by mass. Note that in this Example, in the ceramic raw material powder, fluorine was contained particularly in Alumina powder A and Glass frit A.

A green molded body was made in the same manner as in Example 1 except that this raw material mixture was used, and using this green molded body, a honeycomb structure was made. The porosity of the honeycomb structure was 43.5% by volume, and the average pore size thereof was 15.9 µm.

### (Example 3)

The same raw material mixture as in Example 2 was prepared (fluorine content in inorganic raw materials: 37 ppm by mass), and the same treatments as in Example 2 were performed to make a green molded body. A honeycomb structure was made in the same manner as in Example 2 except that sintering of this green molded body was performed at 1490°C for 5 hours. The porosity of the honeycomb structure was 45.1 % by volume, and the average pore size thereof was 15.3 µm.

### (Example 4)

The same raw material mixture as in Example 2 was prepared (fluorine content in inorganic raw materials: 37 ppm by mass), and the same treatments as in Example 2 were performed to make a green molded body. A honeycomb structure was made in the same manner as in Example 2 except that sintering of this green molded body was performed at 1480°C for 5 hours. The porosity of the honeycomb structure was 45.6% by volume, and the average pore size thereof was 14.6 µm.

### (Comparative Example 1)

Individual constituents were mixed in compounding amounts (unit: part by mass) shown in the following Table 1 to prepare a raw material mixture. The fluorine content in inorganic raw materials (alumina powder, titania powder, magnesia powder, glass frit, and magnesium aluminum titanate powder) in the obtained raw material mixture was less than 20 ppm by mass, which was a minimum limit of detection.

A green molded body was made in the same manner as in Example 1 except that this raw material mixture was used, and using this green molded body, a honeycomb structure was made. The porosity of the honeycomb structure was 46.9% by volume, and the average pore size thereof was 16.9 µm.

**[Table 1]**

| | Example 1 | Example 2-4 | Comparative Example 1 |
|---|---|---|---|
| Alumina powder A^{*1} | 34 | 37 | - |
| Alumina powder B^{*2} | - | - | 37 |
| Titania powder A^{*3} | 34 | 37 | - |
| Titania powder B^{*4} | - | - | 37 |
| Magnesia powder A^{*5} | 2 | 2 | - |
| Magnesia powder B^{*6} | - | - | 2 |
| Glass frit A^{*7} | 3 | 3 | - |
| Glass frit B^{*8} | - | - | 3 |
| Magnesium aluminum titanate powder | 8 | 9 | 9 |
| Aluminum fluoride | 0.17 | - | - |
| Lubricant (glycerin) | 2 | 2 | 2 |
| Pore-forming agent (starch) | 10 | 10 | 10 |
| Organic binder^{*9} | 4 | 4 | 4 |
| Plasticizer^{*10} | 1 | 1 | 1 |
| Water | 22 | 22 | 20 |

| | | | |
|---|---|---|---|
| *1: Alumina powder A (produced by Sumitomo Chemical Co., Ltd., product name "A-21 ") *2: Alumina powder B (produced by Sumitomo Chemical Co., Ltd., product name "AA-3") *3: Titania powder A (produced by DuPont, product name "R-900") *4: Titania powder B (one prepared in a manner where Titania powder A is held at 1500°C for 10 hours in the air and pulverized) *5: Magnesia powder A (produced by Ube Material Industries, Ltd., product name "UC-95S") *6: Magnesia powder B (one prepared in a manner where Magnesia powder A is held at 1500°C for 10 hours in the air and pulverized) *7: Glass frit A (produced by Nippon Frit Co., Ltd., product name "CK0832") *8: Glass frit B (one prepared in a manner where Glass frit A is held at 1500°C for 10 hours in the air and pulverized) *9: Organic binder (produced by Samsung Fine Chemical Co., Ltd., product name "PMB-30U") *10: Plasticizer (produced by NOF Corp., product name "UNILUB 50MB-168") | | | |

With respect to the above mentioned Examples 1 to 4 and Comparative Example 1, the fluorine content in inorganic raw materials, the sintering temperature, and the porosity and the average pore size of a honeycomb structure are collectively shown in the following Table 2.

**[Table 2]**

| | Example 1 | Example 2 | Example 3 | Example 4 | Comparative Example 1 |
|---|---|---|---|---|---|
| Fluorine content (ppm by mass) | 1300 | 37 | 37 | 37 | <20 |
| Sintering temperature (°C) | 1500 | 1500 | 1490 | 1480 | 1500 |
| Porosity (% by volume) | 42.4 | 43.5 | 45.1 | 45.6 | 46.9 |
| Average pore size (µm) | 16.0 | 15.9 | 15.3 | 14.6 | 16.9 |

As evident from the results shown in Table 2, it was confirmed, from comparison of Examples 1, 2 and Comparative Example 1 that the porosity of a honeycomb structure lowers with the increase of the fluorine content in inorganic raw materials in a green molded body. From this, it was confirmed that by the use of a green molded body including a fluorine source, the reactive sintering property of ceramics was improved. In addition, from comparison of Examples 2 to 4, it was understood that the higher the sintering temperature is, the lower the porosity of a honeycomb structure becomes. However, in comparison of Examples 3 and 4 with Comparative Example 1, Examples 3 and 4, where the sintering temperature is low, had lower porosity than that of Comparative Example 1. From this result, it was confirmed that by using a green molded body containing fluorine, it is possible to proceed sintering with lower temperatures and to easily control the porosity of a honeycomb structure. In other words, it was confirmed that by incorporating a predetermined amount of fluorine into a green molded body, it is possible to decrease the sintering temperature required for proceeding sintering until the porosity reaches a desired value or less, as compared to the case where a predetermined amount of fluorine is not contained in a green molded body.

As shown in Table 2, the honeycomb structures obtained in Examples 1 to 4 were ones where the porosity was controlled to fall within the preferred range (42% by volume to 46% by volume) and the average pore size was controlled to fall within the preferred range (14 µm to 16 µm).

### Industrial Applicability

As having been described above, according to the present invention, it is possible to provide a green molded body capable of easily controlling the porosity of a honeycomb structure and a method for producing a honeycomb structure with the use of the green molded body.

### Reference Signs List

70: cylindrical body, 70a: through hole, 70b: plugging material, 70c: partition wall, 100:green molded body, 170b: plugging portion, 170: honeycomb structure

## Claims

1. A green molded body composed of a honeycomb-shaped cylindrical body with a plurality of through holes being formed approximately in parallel with each other,
wherein the cylindrical body comprises a ceramic raw material powder and a fluorine source, and
wherein the ceramic raw material powder is one for forming an aluminum titanate-based ceramics by sintering.

2. The green molded body according to Claim 1, wherein the cylindrical body further comprises a pore-forming agent.

3. The green molded body according to Claim 1 or 2, wherein the cylindrical body further comprises an organic binder.

4. The green molded body according to any one of Claims 1 to 3, wherein a fluorine content in inorganic raw materials in the cylindrical body is 20 ppm by mass or more.

5. A method for producing a honeycomb structure, comprising a sintering step of sintering the green molded body according to any one of Claims 1 to 4.

## Patentansprüche

1. Grüner Formkörper, der sich aus einem wabenförmigen zylindrischen Körper mit mehreren Durchgangslöchern zusammensetzt, die etwa parallel zueinander gebildet sind,
wobei der zylindrische Körper ein keramisches Rohmaterialpulver und eine Fluorquelle aufweist und
wobei das keramische Rohmaterialpulver eines zur Bildung einer Keramik auf Aluminiumtitanatbasis durch Sintern ist.

2. Grüner Formkörper nach Anspruch 1, wobei der zylindrische Körper ferner einen Porenbildner aufweist.

3. Grüner Formkörper nach Anspruch 1 oder 2, wobei der zylindrische Körper ferner ein organisches Bindemittel aufweist.

4. Grüner Formkörper nach einem der Ansprüche 1 bis 3, wobei ein Fluorgehalt in anorganischen Rohmaterialien im zylindrischen Körper massebezogen mindestens 20 ppm beträgt.

5. Verfahren zur Herstellung einer Wabenstruktur mit einem Sinterschritt des Sinterns des grünen Formkörpers nach einem der Ansprüche 1 bis 4.

## Revendications

1. Corps moulé vert constitué d'un corps cylindrique en nid d'abeilles avec une pluralité de trous traversants sensiblement parallèles les uns aux autres,
où le corps cylindrique comprend une poudre de matière brute céramique et une source de fluor, et
où la poudre de matière première céramique est destinée à former une céramique à base de titanate d'aluminium par frittage.

2. Corps moulé vert selon la revendication 1, où le corps cylindrique comprend en outre un agent porogène.

3. Corps moulé vert selon la revendication 1 ou la revendication 2, où le corps cylindrique comprend en outre un liant organique.

4. Corps moulé vert selon l'une des revendications 1 à 3, où une teneur en fluor dans des matières brutes inorganiques du corps cylindrique est au moins de 20 ppm en masse.

5. Procédé de production d'une structure en nid d'abeilles, comprenant une étape de frittage du corps moulé vert selon l'une des revendications 1 à 4.
